# EUROPÄISCHE PATENTSCHRIFT

(11) **EP 1 493 498 B1**
(45) Veröffentlichungstag und Bekanntmachung des Hinweises auf die Patenterteilung: **17.06.2009**
(21) Anmeldenummer: 04014212.7
(22) Anmeldetag: 17.06.2004
(51) Int. Cl.: B05D 7/00, C23C 22/80, B05D 7/14

(54) **Verfahren zur Herstellung einer mit einer Schutzlackschicht versehenen Metallage, durch ein derartiges Verfahren hergestellte Metallage, Verfahren zur Herstellung eines Verbundmateriales und durch ein derartiges Verfahren hergestelltes Verbundmaterial**
Method for producing a metal substrate comprising a protective coating and method of producing a composite laminate comprising a thus produced coated substrate
Procédé de production d'un substrat métallique comprenant un revêtement de protection et procédé de production d'un laminé composite comprenant un substrat métallique ainsi produit

(30) Priorität: 26.06.2003 DE 10328633
(43) Veröffentlichungstag der Anmeldung: 05.01.2005
(73) Patentinhaber: Aluminium Féron GmbH & Co. KG, 52355 Düren (DE)
(72) Erfinder: Höls, Lothar, 52355 Düren (DE); Hirt, Klaus, Dr., 52072 Aachen (DE)
(74) Vertreter: Hauck Patent- und Rechtsanwälte

(56) Entgegenhaltungen:
- EP-A- 0 531 575
- EP-A- 0 787 830
- WO-A-03/086661
- AT-B- 404 241
- DE-A- 10 014 035
- DE-A- 10 159 552

## Beschreibung

Die vorliegende Erfindung betrifft ein Verfahren zur Herstellung einer mit einer Schutzlackschicht versehenen Metallage mit den Merkmalen des Oberbegriffs von Patentanspruch 1.

Verbundmaterialien mit metallischen Oberflächen sind hinreichend bekannt und finden bei zahlreichen Anwendungen des täglichen Lebens Einsatz. Bekannt sind beispielsweise Anwendungen in der Möbelindustrie, im Messebau und im Fassadenbau. Fassadenbauelemente können aus Metallplatten bestehen oder Verbundwerkstoffen, deren Oberflächen metallischen Charakter besitzen. Die Metalloberflächen sind beispielsweise anodischen Veredelungsverfahren, wie zum Beispiel der Eloxierung von Aluminium, unterzogen worden oder besitzen zwecks Oberflächenschutz eine Lackierung.

Zur Herstellung von derartigen Verbundmaterialien hat man bereits ein metallisches Trägermaterial mit einer Schutzlackschicht versehen und das beschichtete metallische Trägermaterial zusammen mit einem geeigneten Kernmaterial bei erhöhtem Druck und Temperaturen verpreßt. Ein derartiges Verfahren ist beispielsweise aus der AT 404 241 B bekannt. Dabei hat man zur Herstellung der mit der Schutzlackschicht versehenen Metallage (des Trägermaterials) das eingangs beschriebene Verfahren angewendet.

Im einzelnen hat man hierbei ein Trägermaterial einseitig mit einem speziellen Beschichtungssystem versehen und anschließend das derart beschichtete Trägermaterial bei erhöhten Temperaturen, vorzugsweise unterhalb von 140°C, getrocknet, um über eine erste Vernetzungsreaktion das Beschichtungssystem teilweise auszuhärten. Dabei erfolgt im Trocknungsschritt (ersten Reaktionsschritt) eine Additionspolymerisation von freien Hydroxylgruppen der Harzkomponente des Beschichtungssystems mit den funktionellen Gruppen der Härterkomponente. In einem zweiten Reaktionsschritt (beim Verpressen zur Herstellung des Verbundmaterials) erfolgt eine Polymerisationsreaktion der (meth)acrylischen Doppelbindungen in der Harzkomponente, welche durch die erhöhten Temperaturen und Drücke während des Verpressens ausgelöst wird. Durch dieses bekannte Verfahren wird eine vollständig vernetzte und kratzfeste Oberflächenbeschichtung auf Basis eines Urethanacrylates eines Urethanacrylatpolymeren erzeugt.

Wie eingangs erwähnt, schlägt die AT 404 241 B als Trägermaterial für das Beschichtungssystem u.a. Metallplatten oder Metallfolien vor. Untersuchungen an einer derartigen mit einer Schutzlackschicht versehenen Metallage aus Aluminium, die eine mögliche, durch Wasser initiierte Oxidation der Aluminiumoberfläche simulieren, zeigen jedoch, daß mit diesem Verfahren keine ausreichende Korrosionsbeständigkeit der Metallagen erreicht werden kann. Der Effekt einer Wasserdampfdiffusion und einer daraus resultierenden Oxidation der Metalloberfläche mit anschließendem Haftungsverlust der Lacke wurde durch einen dreistündigen Kochwassertest und einen Erlenmeyertest simuliert. Beim Kochwassertest wurde ein Verbundmaterial, welches aus kunstharzimprägnierten Papieren (Kern) und einer Deckschicht aus mit einer Schutzlackschicht versehenem Aluminium aufgebaut war, nach den zur Vernetzung sowohl der imprägnierten Papiere als auch der auf dem Metall befindlichen Lackschichten notwendigen Temperatur-, Zeit- und Druckbedingungen zur Hälfte in kochendes Wasser gestellt, und die Veränderung der Metalloberfläche wurde nach drei Stunden begutachtet. Dabei wurde sowohl die in die flüssige Phase eingetauchte Oberfläche als auch die in der Gasphase mit Wasserdampf beaufschlagte Oberfläche beobachtet. Bei einem Erlenmeyertest wurde der Kolben mit Wasser gefüllt, die Öffnung mit der mit der Schutzlackschicht versehenen Metallseite der Verbundprobe abgedeckt und das Wasser bis zum Siedepunkt erhitzt. Nach drei Stunden wurden die Proben begutachtet.

Die auf diese Weise durchgeführten Untersuchungen haben gezeigt, daß alle Schutzlackschichten mehr oder weniger von Feuchtigkeit unterwandert worden sind. Neben der optisch erkennbaren Farbänderung auf der Metalloberfläche, die den dekorativen Charakter eines solchen Verbundmaterials erheblich schmälert, entstanden Wasserblasen zwischen den Lakkierungen und der Metalloberfläche, die zwangsläufig zu Haftungsverlusten führen.

Ein Verfahren mit den Merkmalen des Oberbegriffs des Anspruchs 1 ist aus der DE 101 59 552 A1 bekannt. Bei dem bekannten Verfahren wird eine metallische Unterlage mit mindestens einer Vorbehandlungsschicht versehen, wobei diese Vorbehandlungsschicht eine Beschichtung auf Basis von Phosphat oder auf Basis von Phosphonat, Silan oder/und einem Gemisch auf Basis von Fluoridkomplex, Korrosionsinhibitor, Phosphat, Polymer oder/und fein verteilten Partikeln sein kann.

Aus der DE 100 14 035 A1 ist die Aufbringung eines Mehrschichtüberzuges auf ein Substrat bekannt, wobei der Mehrschichtüberzug aus einer Konversionsschicht und einer auf der Konversionsschicht befindlichen farbgebenden Schicht besteht. Als Verfahren zur Erzeugung der Konversionsschicht wird allgemein die elektrolytische Bildung von Oxidschichten sowie das Chromatieren, Chromitieren oder das Phosphatieren angegeben.

Aus der EP 0 787 830 A2 ist ein Verfahren zur Oberflächenbehandlung von Metallblech bekannt, bei dem auf das Metallblech ein korrosionsfester Überzugsfilm und auf diesen Film ein Überzugsfilm aus einem organischen Harz aufgebracht wird. Zur Ausbildung des korrosionsfesten Überzugsfilmes findet eine chromfreie Zusammensetzung Verwendung, die ein eine Hydroxylgruppe enthaltendes organisches Harz, Phosphorsäure und ein Metallion oder eine Metallverbindung enthält.

In der EP 0 531 575 A1 ist ein Verfahren beschrieben, bei dem eine Chromatschicht auf eine Metallschicht und auf die Chromatschicht eine organische Überzugsschicht aufgebracht wird. Die organische Überzugsschicht wird über diverse Polymerisationsverfahren hergestellt.

Die Stand der Technik gemäß Artikel 54(3)EPÜ darstellende WO 03/086661 A1 beschriebt ein Verfahren zur Aufbringung eines Basisüberzuges auf ein Substrat und zur Aufbringung von mindestens einem transparentem Decküberzug über den Basisüberzug. Um das Substrat korrosionsfest zu machen, kann dieses mit einer Vielzahl von Lösungen vorbehandelt werden, bevor der Basis- und Decküberzug aufgebracht werden.

Der vorliegenden Erfindung liegt die Aufgabe zugrunde, ein Verfahren der eingangs beschriebenen Art zu schaffen, mit dem sich besonders gute Korrosionseigenschaften auf den Trägermaterialien erzielen lassen.

Diese Aufgabe wird erfindungsgemäß bei einem Verfahren der angegebenen Art durch die kennzeichnenden Merkmale von Patentanspruch 1 gelost.

Die mit dem erfindungsgemäßen Verfahren hergestellte Metallage mit Schutzlackschicht und ein hiermit hergestelltes Verbundmaterial haben eine besonders gute Korrosionsfestigkeit. Der Effekt einer Wasserdampfdiffusion und die daraus resultierende Oxidation der Metalloberfläche mit anschließendem Haftungsverlust des Lacks wird weitgehend reduziert. Darüber hinaus sieht die vorgesehene Schutzlackschicht einen Schutz gegenüber dem negativen Einfluß der UV-Strahlung vor, und der optische Eindruck der Metalloberfläche wird durch die vorstehend genannten Faktoren überhaupt nicht oder nur sehr geringfügig verändert. Darüber hinaus kann die Metallage ohne weiteres zur Herstellung von Verbundmaterialien unter den in der Industrie angewendeten Produktionsparametern bearbeitet werden. Auch eine Weiterverarbeitung dieser Verbundmaterialien wirkt sich nicht negativ auf die Eigenschaften der Schutzlackschicht bzw. Metallschicht aus. Die hergestellten Verbundmaterialien zeichnen sich ferner durch eine ausgezeichnete Witterungsbeständigkeit aus.

Ein wesentlicher Aspekt des erfindungsgemäßen Verfahrens besteht in der Durchführung einer Konversionsbehandlung des metallischen Trägermaterials. Die Durchführung einer derartigen Konversionsbehandlung sorgt in Verbindung mit der speziellen Art des Schutzlacks sowie der speziellen Art der Aushärtung desselben für eine besonders gute Haftung der Lackschicht auf dem metallischen Trägermaterial, die für die vorstehend vorgegebenen Eigenschaften wesentlich ist. Bei dem erfindungsgemäßen Verfahren findet zuerst eine gründliche Reinigung der Oberflächen des Trägermaterials statt, die beispielsweise zur Entfernung von Walzölen und sonstigen Verunreinigungen dient. In einem oder mehreren Schritten wird die Konversionsbehandlung oder werden mehrere Konversionsbehandlungen durchgeführt.

Bei dem erfindungsgemäßen Verfahren wird mit der Konversionbehandlung eine Zirkon- und/oder Titanschicht auf die Lackauftragsseite des metallischen Trägermateriales aufgebracht. Versuche haben beispielsweise gezeigt, daß 2 mg/m² - 40mg/m² bezogen auf das Element Zirkon ausreichen, um in Verbindung mit den verwendeten Lacksystemen sehr gute Korrosionseigenschaften auf den Trägermaterialien hervorzurufen. Es wurden mit einer Schutzschicht versehene Metallagen entwickelt, die selbst nach zwei Stunden Testdauer keinerlei optische Veränderungen auf der Metallseite aufwiesen und selbst nach dreistündigem Test keine Haftungsverluste zeigten (Durchführung des vorstehend beschriebenen Erlenmeyertests).

Ferner wird bei dem erfindungsgemäßen Verfahren ein Lack verwendet, der auf radikalische und/oder ionische Weise polymerisierbare Substanzen enthält. Der hier verwendete Begriff "Polymerisation" wird zur Beschreibung solcher Reaktionen verwendet, bei denen aus Monomeren, die reaktive Mehrfachbindungen oder Ringe enthalten, Polymere stufenlos gebildet werden. Im Gegensatz dazu verlaufen Polyadditionen und Polykondensationen als Stufenreaktionen. Eine derartige Polymerisation kann ausgelöst werden durch Einwirkung von Initiatoren, von Wärme, von ionisierender Strahlung oder von Licht. Bei der vorliegenden Erfindung geht es um Lacksysteme, die einer radikalischen und/oder ionischen Polymerisation zum zumindest teilweisen Aushärten derselben unterzogen werden. Bei der radikalischen Polymerisation entstehen aus den Initiatoren bei der Primärreaktion Radikale, die sich an das ungesättigte Monomere zu neuen Radikalen addieren. An diese lagern sich erneut Monomer-Moleküle an usw.. Die Radikale können auch strahlenchemisch, plasmachemisch oder photochemisch erzeugt werden.

Bei der ionischen Polymerisation besteht der erste Wachstumsschritt in einer Anlagerung des Initiators an das Monomere.

Der hier verwendete Begriff "auf radikalische und/oder ionische Weise polymerisierbare Substanzen" betrifft Monomere, Oligomere oder bereits vorhandene Polymere. Der Begriff "Polymerisation" soll Homopolymerisation und Copolymerisationen von mindestens zwei verschiedenen copolymerisierbaren Monomeren abdecken.

Ferner soll der Begriff "Polymerisation" alle bekannten Polymerisationsverfahren, wie Massepolymerisation, Lösungspolymerisation u. dgl. abdecken.

Die auf radikalische oder ionische Weise polymerisierbaren Substanzen werden hiernach auch als Basispolymere bezeichnet. Die Erfindung schließt nicht aus, daß der Lack neben diesen Basispolymeren auch durch Additions- oder Kondensationsreaktionen vernetzbare Substanzen enthält.

Bevorzugte Basispolymere, die durch radikalische oder ionische Polymerisation auf erfinderische Weise zumindest teilweise ausgehärtet werden, sind Acrylate, Methacrylate und Gemische hiervon, wobei die Erfindung sowohl die Erzeugung von Homopolymerisaten als auch die Erzeugung von Copolymerisaten mit anderen Substanzen, bevorzugt Urethanen, Epoxiden und Polyester, umfaßt.

Eine Variante des erfindungsgemäßen Verfahren sieht vor, daß man dem Lack zum Durchführen der radikalischen oder ionischen Polymerisation einen Radikale bildenden Initiator zusetzt. Als Beispiele für derartige Initiatoren seien H₂O₂, tert.-Butylperoxide, Kaliumperoxodisulfat, Cumolhydroperoxid, Azo-Verbindungen, Benzoylperoxid genannt.

Bei einer bevorzugten Ausführungsform des erfindungsgemäßen Verfahrens behandelt man den auf das Trägermaterial aufgetragenen Lack zum Durchführen der radikalischen und/oder ionischen Polymerisation auf strahlenchemische, plasmachemische oder photochemische Weise. Besonders bevorzugt wird ein Verfahren, bei dem man den auf das Trägermaterial aufgetragenen Lack einer UV-Behandlung unterzieht. Hierbei wird der Lack auf das Trägermaterial aufgebracht, die im Lack vorhandenen Lösungsmittel, falls solche vorhanden sind, werden verdampft, und die Schicht wird unter UV-Licht gehärtet bzw. radikalisch polymerisiert. Hierbei wird vorzugsweise im Lack mit einem Photoinitiator gearbeitet. Eine weitere bevorzugte Behandlung betrifft eine Elektronenstrahlhärtung des Lacks.

Bei einer weiteren bevorzugten Ausführungsform des erfindungsgemäßen Verfahrens wird ein Lack verwendet, der zusätzlich auf additive und/oder kondensierende Weise zumindest teilweise aushärtbare Substanzen enthält. Besonders bevorzugt wird ein Lack verwendet, der nach dem Dual Cure-Verfahren zumindest teilweise ausgehärtet wird.

Nach dem Dual Cure-Verfahren werden einerseits die Doppelbindungen durch UV-Licht polymerisiert, andererseits in dasselbe Molekül eingebaute Isocyanatgruppen durch Mischung mit entsprechenden OH-funktionellen Verbindungen oder generell mit für Isocyanate geeigneten Partnern über eine Additionsreaktion vernetzt. Diese Verbindungen können in Abmischung mit Verbindungen, die als Reaktionspartner dienen können, entweder alleine oder in Kombination mit nichtisocyanatgruppenhaltigen, radikalisch vernetzbaren Verbindungen kombiniert werden. Die Auswahl der für Isocyanate reaktiven Partner läßt eine breite Auswahl zur Haftungssteuerung der Lacke auf fast allen Substanzen zu.

Als Trägermaterial für die erfindungsgemäß herzustellende Metallage findet vorzugsweise Aluminium Verwendung. Dieses Material zeichnet sich durch einen günstigen Preis aus, so daß sich die mit dem erfindungsgemäßen Verfahren erzielte verbesserte Korrosionsfestigkeit besonders stark bemerkbar macht. Natürlich schließt dies nicht aus, daß auch andere Metalle Verwendung finden können, beispielsweise Kupfer.

Das metallische Trägermaterial kann in Folienform, Bandform, Plattenform etc. Anwendung finden.

Um die Haftung der Metallage mit dem Kernmaterial des herzustellenden Verbundmateriales zu verbessern, wird die Metallage auf der der Lackaufbringungsseite gegenüberliegenden Seite vorzugsweise mit einem Haftmittel, insbesondere Haftprimer, versehen. Die Haftung der Metallage am Kern kann aber auch auf andere Weise verbessert werden, beispielsweise über Klebefolien.

Die auf das Trägermaterial aufgebrachte Schutzlackschicht kann als Klarlack vorliegen oder eingefärbt sein bzw. werden, kann in glänzender oder mattierter Ausführung aufgebracht werden oder kann mit vollflächigen oder partiellen Drucken sowohl nach konventionellen Druckverfahren als auch nach digitalen Druckverfahren einschließlich Thermodiffusionsverfahren versehen oder als solche ausgeführt werden. Bei Bedarf kann die Schutzlackschicht mit einem UV-Schutz und Antioxidantien ausgestattet werden.

Beispielsweise kann eine mit einer Schutzlackschicht versehene Metallage wie folgt hergestellt werden: Ein Aluminiumband wird in einem ersten Schritt einseitig und/oder beidseitig nach einem Konversionsverfahren oberflächenbehandelt, bis eine Schichtdicke von beispielsweise 1-40 mg/m² bezogen auf Zirkon resultiert. Die oberflächenbehandelte Seite des Aluminiumbandes wird in einem weiteren Schritt mit Lackauftragsmengen von 10-100 g/m² schutzlackiert, wobei die Lacke in einem oder mehreren Schritten aufgebracht werden können, je nach Problemstellung auch unterschiedlich rezeptiert sein können. Die Rückseite des Bandes wird in demselben Schritt oder einem weiteren Schritt mit einem Haftprimer versehen, der unter den Herstellungsbedingungen des herzustellenden Verbundmateriales eine gute Haftung zu einer Trägerschicht (Kern), beispielsweise harzgetränkten Papieren der Mittellage des Verbundes, hervorruft. Alternativ kann die Haftung der Metallage beispielsweise am Papierkern durch die Zwischenlage einer Klebefolie erreicht werden.

Die vorliegende Erfindung betrifft ferner eine mit einer Schutzlackschicht versehene Metallage, die nach dem vorstehend beschriebenen Verfahren hergestellt ist. Diese Metallage findet Verwendung zur Herstellung eines einen Kern, eine auf diesem angeordnete Metallschicht und eine auf der Metallschicht angeordnete Schutzlackschicht aufweisenden Verbundmateriales, bei dem die Metallage mit Schutzlackschicht die Metallschicht und die auf dieser angeordnete-Schutzlackschicht bilden.

Ferner bezieht sich die Erfindung auf ein Verfahren zur Herstellung eines Verbundmateriales unter Verwendung der mit einer Schutzlackschicht versehenen Metallage, das dadurch gekennzeichnet ist, daß die mit der Schutzlackschicht nach außen weisende Metallage mit einem Kernmaterial verpreßt wird. Vorzugsweise kann dieser Vorgang des Verpressens unter üblichen Preßbedingungen (Druck, Temperatur, Zeit) durchgeführt werden. Solche üblichen Preßbedingungen sind dem Fachmann für die Herstellung von Verbundmaterialien (Laminaten) bekannt.

Bei dem Kernmaterial kann es sich vorzugsweise um einen harzgetränkten Papierverbund handeln, beispielsweise einen melamingetränkten Papierverbund. Generell können jedoch für das erfindungsgemäße Verfahren beliebige Kernmaterialien Verwendung finden, beispielsweise gegen Witterungseinflüsse beständige Papiere, Kunststoffe oder Naturstoffe, beispielsweise Holz. Ferner kann der Kern vollständig mit diesen Materialien ausgefüllt sein oder aus statisch sinnvollen Konstruktionen zwecks Gewichtsreduzierung aufgebaut sein, d.h. beispielsweise Wabenstrukturen besitzen.

Wenn als Kern ein imprägnierter Papierverbund Verwendung findet, so werden beim Verpressen unter den geeigneten Druck-, Zeit- und Temperatureinflüssen die imprägnierten Papierlagen durch die entsprechenden chemischen Reaktionen verfestigt, wobei gleichzeitig die Haftung der Metallage auf dem Kern optimiert wird.

Generell kann durch das Verpressen zur Herstellung des Verbundmateriales die auf der Metallage vorgesehene Schutzlackschicht vollständig aushärten, d.h. in den Endzustand übergehen. Dies muß jedoch nicht zwingend der Fall sein. Vielmehr kann der Schutzlack auch vor dem Verpressen bereits vollständig ausgehärtet sein.

Das mit der Schutzlackschicht versehenen Metallband wird mit der der Schutzlackschicht gegenüberliegenden Seite, die möglicherweise mit einem Haftmittel bzw. einem Haftvermittler oder einer Klebefolie versehen ist, auf das Kernmaterial entweder einseitig oder beidseitig aufgelegt. Wahlweise kann eine derartige Metallage, die mit der Schutzlackschicht die Außenlage des Verbundes bilden soll, mit einer als eine der letzten Schichten fungierenden innenliegenden Metallage kombiniert werden, die als reines Gegenzugmaterial die einseitige thermische Ausdehnung zu kompensieren in der Lage ist.

Die Erfindung betrifft ferner ein nach einem derartigen Verfahren hergestelltes Verbundmaterial.

Ergänzend sei noch darauf hingewiesen, daß vorzugsweise folgende Lacksysteme als die Schutzlackschicht auf der Metallage bildender Lack verwendet werden:
1. Lacksysteme auf Basis radikalischer Vernetzungsreaktionen;
2. Lacksysteme, die auf einer Mischung aus radikalisch härtenden und additiv härtenden Lacksystemen basieren; und/oder
3. Lacksysteme, die auf radikalisch härtenden Lacksystemen basieren, die neben radikalisch zugänglichen Gruppen innerhalb des Moleküls weiterhin nach anderen Reaktionsprinzipien zugängliche Gruppen besitzen.

Das erfindungsgemäße Verfahren wird nachfolgend anhand eines Ausführungsbeispiels im einzelnen erläutert.

Eine Aluminiumfolie mit einer Stärke von 100µm wurde nach den Wasch- und Entfettungsprozessen einer Konversionsbehandlung unterzogen, so daß nach dem Naßauftrag mittels Walzenverfahren und anschließender Trocknung eine Zirkonmenge von 10-12 mg/m² als Oberflächenschicht resultierte. Auf diese Schicht wurde ebenfalls durch Applikation des Walzenverfahrens folgende Lackschicht aufgetragen:
eine Mischung aus aliphatischen Urethanacrylaten mit radikalisch zugänglichen Gruppen, aliphatischen Urethanacrylaten mit zusätzlich reaktiv zugänglichen Isocyanatgruppen, OH-funktionellen Acrylaten, OH-funktionellen Polyestern und
einem geringen Anteil an Lösungsmitteln sowie einem Photoinitiator.

Nach dem Auftrag des Lackes wurde die Lackschicht mittels einer UV-Lampe, die die zur radikalischen Vernetzung notwendige Leistung aufwies, unter inerter Atmosphäre ausgehärtet. Das resultierende Produkt (beschichtete Aluminiumfolie) wies eine hervorragende UV-Beständigkeit auf und zeigte nach einem dreistündigen Erlenmeyertest keine Korrosionsansätze auf der Oberfläche des Aluminiumbandes.

Das so erstellte Aluminiumband wurde in einem weiteren Schritt mit einem geeigneten Haftprimer zur Haftungserzielung gegen ausgehärtete Melaminharze rückseitig versehen und beidseitig gegen 20 Lagen eines melaminharzgetränkten Kernpapieres in einer Presse bei 150°C und unter einem Druck von 50 Hpa (50 bar) 20 Minuten verpreßt. Das resultierende Verbundmaterial wurde einem Xenontest 1.200/3 über 2.500 h unterzogen. Das Material zeigte keinerlei Beeinträchtigung.

## Patentansprüche

1. Verfahren zur Herstellung einer mit einer Schutzlackschicht versehenen Metallage, die zur Herstellung eines einen Kern, einer auf diesem angeordnete Metallschicht und einer auf der Metallschicht angeordnete Schutzlackschicht aufweisenden Verbundmateriales dient, mit den folgenden Schritten:
a. Bereitstellen eines metallischen Trägermateriales;
b. Reinigen des Trägermateriales;
c. Aufbringen eines Lacks auf das Trägermaterial zur Herstellung der Schutzlackschicht; und
d. zumindest teilweises Aushärtenlassen der Schutzlackschicht;
wobei das Trägermaterial auf der Lackaufbringseite nach der Reinigungsbehandlung einer Konversionsbehandlung unterzogen wird;
ein Lack verwendet wird, der auf radikalische und/oder ionische Weise polymerisierbare Substanzen enthält; und
der auf das Trägermaterial aufgebrachte Lack einer radikalischen und/oder ionischen Polymerisation zum zumindest teilweisen Aushärten desselben unterzogen wird,
**dadurch gekennzeichnet, daß** mit der Konversionsbehandlung eine Zirkon- und/oder Titanschicht auf die Lackauftragsseite des metallischen Trägermateriales aufgebracht wird.

2. Verfahren nach Anspruch 1, **dadurch gekennzeichnet, daß** als Konversionbehandlung ein No Rinse Verfahren durchgeführt wird.

3. Verfahren nach einem der vorangehenden Ansprüche, **dadurch gekennzeichnet, daß** ein Lack verwendet wird, der zusätzlich auf additive und/oder kondensierende Weise zumindest teilweise aushärtbare Substanzen enthält.

4. Verfahren nach einem der vorangehenden Ansprüche, **dadurch gekennzeichnet, daß** ein Lack verwendet wird, der auf radikalisch härtenden Lacksystemen basiert, die neben radikalisch zugänglichen Gruppen innerhalb des Moleküls weiterhin nach anderen Reaktionsprinzipien zugängliche Gruppen besitzen.

5. Verfahren nach einem der vorangehenden Ansprüche, **dadurch gekennzeichnet, daß** ein Lack verwendet wird, der nach dem Dual Cure-Verfahren zumindest teilweise ausgehärtet wird.

6. Verfahren nach einem der vorangehenden Ansprüche, **dadurch gekennzeichnet, daß** die Metallage auf der der Lackaufbringungsseite gegenüberliegenden Seite mit einem Haftmittel, insbesondere Haftprimer, versehen wird.

7. Mit einer Schutzlackschicht versehene Metallage, hergestellt nach dem Verfahren nach einem der Ansprüche 1 - 6.

8. Verfahren zur Herstellung eines Verbundmateriales unter Verwendung der mit einer Schutzlackschicht versehenen Metallage nach Anspruch 7, **dadurch gekennzeichnet, daß** die mit der Schutzlackschicht nach außen weisende Metallage mit einem Kernmaterial verpreßt wird.

9. Verfahren nach Anspruch 8, **dadurch gekennzeichnet, daß** unter üblichen Preßbedingungen verpreßt wird.

10. Verfahren nach Anspruch 8 oder 9, **dadurch gekennzeichnet, daß** als Kernmaterial ein harzgetränkter Papierverbund verwendet wird.

11. Verbundmaterial, hergestellt durch das Verfahren nach einem der Ansprüche 9 - 10.

## Claims

1. A method for producing a metal layer provided with a layer of a protective lacquer, said metal layer serving for the production of a composite material having a core, a metal layer disposed on the core and a layer of a protective lacquer disposed on the metal layer, said method comprising the following steps:
a. providing a metallic substrate;
b. cleaning the substrate;
c. applying a lacquer onto the substrate for the production of a layer of a protective lacquer; and
d. at least partly curing the layer of protective lacquer;
wherein the substrate on the lacquer application side is subjected to a conversion treatment after the cleaning treatment;
a lacquer is used which contains substances polymerisable in a radical and/or ionic manner; and
the lacquer applied to the substrate is subjected to a radical and/or ionic polymerisation for the at least partly curing of the same;
**characterized in that** a zirconium layer and/or titanium layer is applied to the lacquer application side of the metallic substrate by the conversion treatment.

2. The method according to claim 1, **characterized in that** a no rinse method is carried out as conversion treatment.

3. The method according to one of the preceding claims, **characterized in that** a lacquer is used which additionally contains substances at least partly curable in an additive and/or condensing manner.

4. The method according to one of the preceding claims, **characterized in that** a lacquer is used which is based on radically curing lacquer systems having, in addition to radically accessible groups within the molecule, furthermore groups accessible according to other reaction principles.

5. The method according to one of the preceding claims, **characterized in that** a lacquer is used which is at least partly cured according to the dual cure method.

6. The method according to one of the preceding claims, **characterized in that** the metal layer is provided with a bonding agent, especially bonding primer, on the side opposite to the lacquer application side.

7. A metal layer provided with a layer of a protective lacquer and produced according to the method of one of the claims 1-6.

8. A method for producing a composite material with use of the metal layer provided with a layer of a protective lacquer according to claim 7, **characterized in that** the metal layer pointing outwardly with the layer of the protective lacquer is pressed with a core material.

9. The method according to claim 8, **characterized in that** it is pressed with customary pressing conditions.

10. The method according to claim 8 or 8, **characterized in that** a resin impregnated paper compound is used as core material.

11. A composite material produced by the method according to one of the claims 8-10.

## Revendications

1. Procédé de fabrication d'une couche métallique pourvue d'une couche de vernis protecteur, qui sert à la fabrication d'un matériau composite présentant une âme, une couche métallique agencée sur celle-ci et une couche de vernis protecteur aménagée par-dessus la couche métallique, selon les étapes suivantes consistant à :
a. préparer un matériau support métallique ;
b. nettoyer le support métallique ;
c. appliquer un vernis sur le matériau support pour élaborer la couche de vernis protecteur ; et
d. laisser durcir au moins en partie la couche de vernis protecteur ;
dans lequel
le matériau support est soumis, sur la face d'application du vernis, après le traitement de nettoyage, à un traitement de conversion ;
on utilise un vernis qui contient des substances polymérisables en mode radicalaire et/ou en mode ionique ; et
le vernis appliqué sur le matériau support est soumis à une polymérisation radicalaire et/ou ionique pour durcir en moins en partie ce matériau ;
**caractérisé en ce que**, avec le traitement de conversion, une couche de zirconium et/ou de titane est appliquée sur la face d'application du vernis du matériau support métallique.

2. Procédé selon la revendication 1, **caractérisé en ce qu'**on réalise comme traitement de conversion un procédé sans rinçage.

3. Procédé selon l'une quelconque des revendications précédentes, **caractérisé en ce qu'**on utilise un vernis qui contient en outre par addition et/ou condensation des substances au moins en partie durcissables.

4. Procédé selon l'une quelconque des revendications précédentes, **caractérisé en ce qu'**on utilise un vernis qui est basé sur des systèmes de vernis durcissant par voie radicalaire, qui possèdent, à côté de groupements accessibles par voie radicalaire au sein de la molécule, en outre des groupements accessibles par d'autres principes réactionnels.

5. Procédé selon l'une quelconque des revendications précédentes, **caractérisé en ce qu'**on utilise un vernis qui est au moins en partie durci selon le procédé du double durcissement.

6. Procédé selon l'une quelconque des revendications précédentes, **caractérisé en ce que** la couche métallique est dotée, sur la face opposée à la face d'application du vernis, d'un adhésif, en particulier d'une couche de fond adhésive.

7. Couche métallique pourvue d'une couche de vernis protecteur fabriquée selon le procédé de l'une quelconque des revendications 1 à 6.

8. Procédé de fabrication d'un matériau composite en utilisant la couche métallique pourvue d'une couche de vernis protecteur selon la revendication 7, **caractérisé en ce que** la couche métallique tournée vers l'extérieur avec la couche de vernis protecteur est pressée sur un matériau d'âme.

9. Procédé selon la revendication 8, **caractérisé en ce que** le pressage se fait dans des conditions de pressage usuelles.

10. Procédé selon la revendication 8 ou 9, **caractérisé en ce que** l'on utilise comme matériau d'âme un composite de papier imprégné de résine.

11. Matériau composite fabriqué par le procédé selon l'une quelconque des revendications 8 à 10.
